(19) Europäisches Patentamt / European Patent Office / Office européen des brevets

(11) **EP 4 721 845 A1**

(12) **EUROPEAN PATENT APPLICATION**
published in accordance with Art. 153(4) EPC

(43) Date of publication:
08.04.2026  Bulletin 2026/15

(21) Application number: 24811167.6

(22) Date of filing: 23.05.2024

(51) International Patent Classification (IPC):
B01D 69/00 (2006.01)    B01D 61/14 (2006.01)
B01D 69/02 (2006.01)    B01D 69/04 (2006.01)
B01D 69/08 (2006.01)    B01D 71/40 (2006.01)
B01D 71/68 (2006.01)

(52) Cooperative Patent Classification (CPC):
B01D 67/00165; B01D 61/14; B01D 61/145;
B01D 67/0088; B01D 69/00; B01D 69/02;
B01D 69/04; B01D 69/08; B01D 69/087;
B01D 71/40; B01D 71/68; B01D 2323/02;
B01D 2325/0283

(86) International application number:
PCT/JP2024/018944

(87) International publication number:
WO 2024/242161 (28.11.2024 Gazette 2024/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority:  25.05.2023  JP 2023085901

(71) Applicant: Asahi Kasei Life Science Corporation
Tokyo 100-0006 (JP)

(72) Inventors:
• OISHI, Teruhiko
  Tokyo 100-0006 (JP)
• MIYAMOTO, Daisuke
  Tokyo 100-0006 (JP)
• MICHIKAWA, Kumiko
  Tokyo 100-0006 (JP)

(74) Representative: dompatent
Partnerschaft von
Patentanwälten und Rechtsanwälten mbB
Deichmannhaus am Dom
Bahnhofsvorplatz 1
50667 Köln (DE)

(54) **POROUS MEMBRANE**

(57)    Provided is a porous membrane comprising a hydrophobic polymer and a water-insoluble hydrophilic polymer, wherein pore size/fiber diameter in an outer surface of the porous membrane is 0.15 or more and 0.26 or less, major axis/minor axis of an oriented bounding rectangle of a pore in the outer surface of the porous membrane is 1.00 or more and 1.60 or less, and the porous membrane has a dense layer, wherein an abundance rate of 10 nm or smaller pores in the dense layer is 8.0% or less, and a thickness of the dense layer is 1 to 8 $\mu$m.

[Fig. 4]

Oriented bounding rectangle

EP 4 721 845 A1

## Description

## Technical Field

The present invention relates to a porous membrane.

## Background Art

In recent years, treatment using fractionated plasma products and biopharmaceuticals as medicaments has been widespread because it causes few adverse reactions and has high therapeutic effects. However, since the fractionated plasma products are derived from human blood and the biopharmaceuticals are derived from animal cells, the medicaments have the risk of being contaminated with pathogenic substances such as viruses.

In order to prevent the viral contamination of medicaments, the removal or inactivation of viruses is always performed. Examples of the method for removing or inactivating viruses include heat treatment, optical treatment, and treatment with chemicals. In view of problems associated with them such as protein denaturation, virus inactivation efficiency, and contamination with chemicals, a membrane filtration method which is effective for every virus, irrespective of thermal and chemical properties of viruses, has received attention.

Examples of the virus to be removed or inactivated include poliovirus having a diameter of 25 to 30 nm, and parvovirus having a diameter of 18 to 24 nm as the smallest virus and also include HIV virus having a diameter of 80 to 100 nm as a relatively large virus. In recent years, there have been growing needs, particularly, for the removal of small viruses such as parvovirus.

The performance primarily required for virus removal membranes is safety. The safety includes safety that prevents pathogenic substances such as viruses from contaminating fractionated plasma products and biopharmaceuticals and safety that prevents foreign materials such as eluates from virus removal membranes.

For the safety that prevents contamination with pathogenic substances such as viruses, it is important to thoroughly remove viruses through a virus removal membrane. Non Patent Literature 1 states that the clearance (LRV) to be achieved for minute virus of mice or porcine parvovirus is 4. However, in recent years, LRV of 5 or more has been desired from the viewpoint of further safety against viruses. For the safety that prevents contamination with foreign materials such as eluates, it is important not to allow eluates to come out of virus removal membranes.

The performance secondarily required for virus removal membranes is productivity. The productivity refers to efficient recovery of proteins such as albumin having a size of 5 nm and antibodies having a size of 10 nm. Ultrafiltration membranes and blood dialysis membranes having a pore size on the order of several nm as well as reverse osmosis membranes having a smaller pore size are not suitable as virus removal membranes because proteins block pores at the time of filtration. Particularly, for the purpose of removing small viruses such as parvovirus, achieving both the safety and the productivity described above have been difficult because the viruses and the proteins have similar sizes.

Patent Literature 1 discloses a virus removal method using a membrane made of regenerated cellulose.

Patent Literature 2 discloses a virus removal membrane having a surface hydrophilized by a graft polymerization method performed on a polyvinylidene fluoride (PVDF) membrane formed by a thermally induced phase separation method. These membranes tend to have an overwhelmingly low filtration throughput of an antibody-containing liquid relative to the hydrophobic interaction of the antibody.

Patent Literature 3 discloses a virus removal membrane surface-coated with hydroxyalkylcellulose, the membrane having an initial virus logarithmic reduction value (LRV) of at least 4.0 for PhiX174. An essentially hydrophobic polymer membrane base material is used which has a surface rendered hydrophilic with hydroxyalkylcellulose and has a throughput of more than approximately 1000 L/m$^2$.

Patent Literature 4 discloses a virus removal membrane formed from a polysulfone polymer and polyvinylpyrrolidone (PVP) in a blended state.

Patent Literature 5 discloses a virus removal membrane formed from a polysulfone polymer and a vinylpyrrolidone-vinyl acetate copolymer in a blended state, the membrane being coated with a polysaccharide or a polysaccharide derivative. These membranes can efficiently separate and remove viruses contained in solutions and are efficiently permeable to useful substances to be recovered such as proteins.

Patent Literature 6 discloses a hollow fiber membrane made of polyethersulfone as a base material and a hydrophilic polymer as a coating layer. This membrane is capable of highly efficiently removing viruses contained in protein solutions, suppressing a high flux and reduction in flux caused by clogging during filtration, and highly efficiently recovering proteins from virus-containing protein solutions.

Patent Literature 7 discloses a hollow fiber filtration membrane comprising a polysulfone polymer and a hydrophilic polymer and having a gradient structure where a pore size is increased from an outer surface part toward an inner surface part of the membrane. This membrane is capable of suppressing time-dependent reduction in flux during filtration even in the presence of a relatively small foreign substance similar in size to an effective component supposed to pass through the membrane, such as a protein associate, and efficiently recovering useful components.

Patent Literature 8 discloses a hollow fiber filtration membrane comprising a polysulfone polymer and a hydrophilic polymer and having a gradient asymmetric structure where an average pore size of pores is increased from an outer surface toward an inner surface. This membrane suppresses the adsorption of proteins onto a pore surface of a dense layer during protein solution filtration and has performance excellent in protein permeability.

Patent Literature 9 discloses a porous membrane comprising a hydrophobic polymer and a water-insoluble hydrophilic polymer and having a gradient structure where an average pore size of pores is increased from an outlet-side part toward a feed-side part. This membrane is capable of highly efficiently recovering useful components while suppressing clogging during protein solution filtration.

Patent Literature 10 discloses a porous hollow fiber membrane comprising a polysulfone polymer and a hydrophilic polymer and having a dense layer in a central region in the membrane thickness. This membrane is capable of removing viruses while suppressing time-dependent reduction in flux during protein solution filtration.

Patent Literature 11 discloses a porous membrane comprising a hydrophilic polymer coated with a hydrophobic polymer and having a membrane surface defined by TOF-SIMS. This membrane is capable of decreasing the phenomenon in which membranes are firmly fixed to each other at the time of porous membrane production.

Patent Literatures 3 to 11 state that a membrane comprising a hydrophobic polymer and a hydrophilic polymer is excellent in the removal of viruses from protein solutions. However, none of these literatures has described that the membranes disclosed therein have a high filtration throughput of an antibody-containing liquid relative to the hydrophobic interaction of the antibody.

**Citation List**

**Patent Literature**

Patent Literature 1: Japanese Patent No. 4024041

Patent Literature 2: International Publication No. WO 2004/035180

Patent Literature 3: Japanese Patent No. 4504963

Patent Literature 4: International Publication No. WO 2011/111679

Patent Literature 5: Japanese Patent No. 5403444

Patent Literature 6: Japanese Patent No. 6770807

Patent Literature 7: Japanese Patent No. 6522001

Patent Literature 8: Japanese Patent No. 6433513

Patent Literature 9: Japanese Patent No. 6385444

Patent Literature 10: Japanese Patent No. 6367977

Patent Literature 11: Japanese Patent No. 7185766

**Non-Patent Literature**

Non-Patent Literature 1: PDA Journal of GMP and Validation in Japan, Vol. 7, No. 1, p. 44 (2005)

Non-Patent Literature 2: Biotechnology and Bioengineering Vol.118, p.1105-1115 (2021)

Non-Patent Literature 3: Biotechnology and Bioengineering Vol.106, p.627-637 (2010)

# EP 4 721 845 A1

## Summary of Invention

### Technical Problem

An object of the present invention is to provide a porous membrane that has a high filtration throughput of an antibody-containing liquid relative to the hydrophobic interaction of the antibody and is excellent in virus removal performance.

### Solution to Problem

The present inventors have conducted diligent studies and experiments to attain the object and consequently completed the present invention by finding that a porous membrane having a predetermined structure can attain the object.

Specifically, the present invention is as follows.

[1] A porous membrane comprising a hydrophobic polymer and a water-insoluble hydrophilic polymer, wherein

pore size/fiber diameter in an outer surface of the porous membrane is 0.15 or more and 0.26 or less,
major axis/minor axis of an oriented bounding rectangle of a pore in the outer surface of the porous membrane is 1.00 or more and 1.60 or less, and
the porous membrane has a dense layer, wherein
an abundance rate of 10 nm or smaller pores in the dense layer is 8.0% or less, and
a thickness of the dense layer is 1 to 8 $\mu$m.

[2] The porous membrane according to [1], wherein the water-insoluble hydrophilic polymer is electrically neutral.
[3] The porous membrane according to [1] or [2], wherein the hydrophobic polymer is a polysulfone polymer.
[4] The porous membrane according to any of [1] to [3], wherein the water-insoluble hydrophilic polymer is a vinyl polymer.
[5] The porous membrane according to any of [1] to [4], wherein the porous membrane has a gradient structure where the pore size varies continuously from the outer surface toward a wetted surface of the porous membrane.
[6] The porous membrane according to any of [1] to [5], wherein a slope of the gradient of an average pore size from the dense layer to a coarse layer is 0.5 to 12.0.
[7] The porous membrane according to any of [1] to [6], wherein the porous membrane is an ultrafiltration membrane.
[8] The porous membrane according to any of [1] to [7], wherein the porous membrane is a virus removal membrane.
[9] The porous membrane according to any of [1] to [8], wherein the porous membrane is a membrane in a hollow fiber form or a membrane in a tubular form.
[10] A filter comprising a porous membrane according to any of [1] to [9].
[11] A method for producing a porous membrane, comprising:

discharging a membrane formation dope containing a hydrophobic polymer, a good solvent, and a non-solvent from a spinneret; and
bringing a membrane outer surface coagulating liquid into contact with the membrane formation dope at the same linear velocity as that of the membrane formation dope discharged from the spinneret and in parallel to the direction of discharge of the membrane formation dope.

[12] A method for purifying an antibody, comprising: providing a solution containing the antibody; and filtering the solution through a porous membrane according to any of [1] to [9] to purify the antibody.

### Advantageous Effect of Invention

The present invention can provide a porous membrane that has a high filtration throughput of an antibody-containing liquid relative to the hydrophobic interaction of the antibody and is excellent in virus removal performance.

### Brief Description of Drawings

[Figure 1] Figure 1 is a diagram showing an example of image processing in a local thickness method according to an embodiment.

[Figure 2] Figure 2 is a diagram showing an example of the largest circle shown in the local thickness method according to an embodiment.

[Figure 3] Figure 3 is a diagram showing an example of the largest circle shown in the local thickness method according to an embodiment.

[Figure 4] Figure 4 is a diagram showing an example of image processing according to an embodiment.

## Description of Embodiments

Hereinafter, an embodiment of the present invention (also referred to as the "present embodiment") will be described in detail. However, the following illustration is given for describing the present invention and does not intend to limit the present invention by the contents given below. The present invention can be carried out through appropriate changes or modifications made without departing from the spirit of the present invention.

One embodiment of the present invention relates to a porous membrane comprising a hydrophobic polymer and a water-insoluble hydrophilic polymer, wherein pore size/fiber diameter in an outer surface of the porous membrane is 0.15 or more and 0.26 or less, major axis/minor axis of an oriented bounding rectangle of a pore in the outer surface of the porous membrane is 1.00 or more and 1.60 or less, and the porous membrane has a dense layer, wherein an abundance rate of 10 nm or smaller pores in the dense layer is 8.0% or less, and a thickness of the dense layer is 1 to 8 $\mu$m.

The porous membrane of the present embodiment preferably has a filtration throughput of 4.0 kg or more and a virus clearance (LRV) of 5 or more when a solution of 25°C having an antibody concentration adjusted to 15 mg/mL with a buffer solution is filtered through the porous membrane at an effective filtration pressure of 196 kPa for 3 hours to collect an antibody having high hydrophobicity.

[Composition of porous membrane]

The porous membrane (hereinafter, also simply referred to as the "membrane") of the present embodiment is composed mainly of a hydrophobic polymer and a water-insoluble hydrophilic polymer. In this context, the phrase "composed mainly of a hydrophobic polymer and a water-insoluble hydrophilic polymer" means that the total of the hydrophobic polymer and the water-insoluble hydrophilic polymer accounts for 80% by mass or more, preferably 90% by mass or more, more preferably 95% by mass or more, further preferably 100% by mass, of materials constituting the porous membrane.

[Hydrophobic polymer]

Examples of the hydrophobic polymer include polysulfone polymers, polyamide, polyimide, polyetherimide, polyphenylene ether, and polyphenylene sulfide. Among them, an aromatic polysulfone polymer is preferred. Examples of the aromatic polysulfone polymer that may be used in the present invention include polymers having a repeat unit represented by the general formula (1) or the general formula (2) given below. In the formulas, Ar represents preferably a 2-substituted phenyl group, more preferably a 2-para-substituted phenyl group. The degree of polymerization or the molecular weight of such a hydrophobic polymer compound is not particularly limited.

$$\text{-O-Ar-C(CH}_3)_2\text{-Ar-O-Ar-SO}_2\text{-Ar-} \qquad (1)$$

$$\text{-O-Ar-SO}_2\text{-Ar-} \qquad (2)$$

The aromatic polysulfone polymer may contain a functional group or a substituent such as an alkyl group in the structure of the general formula (1) or the general formula (2), and a hydrogen atom of the hydrocarbon backbone may be replaced with another atom such as halogen or a substituent. These polysulfone polymers may each be used singly or may be used as a mixture of two or more thereof.

[Hydrophilic polymer]

In the present embodiment, the hydrophilic polymer refers to a polymer that makes a contact angle of 90 degrees or less when PBS (solution prepared by dissolving 9.6 g of Dulbecco's PBS(-) powder "Nissui" commercially available from Nissui Pharmaceutical Co., Ltd. in water to adjust the total amount to 1 L) is brought into contact with a film of the polymer.

In the present embodiment, the contact angle of the hydrophilic polymer is preferably 60 degrees or less, more preferably 40 degrees or less. The porous membrane containing the hydrophilic polymer having a contact angle of 60 degrees or less is wettable with water, and the porous membrane containing the hydrophilic polymer having a contact angle of 40 degrees or less more markedly exhibits this tendency to be wettable with water.

The contact angle means an angle formed by a water droplet surface when water is added dropwise to a film surface, and is defined by JIS R3257.

[Water-insoluble hydrophilic polymer]

In the present embodiment, the water-insoluble hydrophilic polymer is a substance that satisfies the contact angle described above and an elution rate. The water-insoluble hydrophilic polymer includes a hydrophilic polymer that is water-insoluble in itself as well as even a hydrophilic polymer derived from a water-soluble hydrophilic polymer rendered water-insoluble in a production process. Specifically, even a water-soluble hydrophilic polymer is included in the water-insoluble hydrophilic polymer according to the present embodiment as long as the water-soluble hydrophilic polymer is a substance that satisfies the contact angle, and is rendered water-insoluble in a production process so as to satisfy the elution rate in constant-pressure dead-end filtration after filter assembly.

The porous membrane of the present embodiment contains the water-insoluble hydrophilic polymer.

In the porous membrane of the present embodiment, a base material membrane containing the hydrophobic polymer is preferably hydrophilized by the presence of the water-insoluble hydrophilic polymer in a pore surface of the base material membrane, from the viewpoint of preventing rapid reduction in filtration rate caused by the clogging of the membrane ascribable to the adsorption of a protein.

Examples of the method for hydrophilizing the base material membrane include coating, graft reaction, and cross-linking reaction after formation of the base material membrane made of the hydrophobic polymer.

[Vinyl polymer]

Examples of the water-insoluble hydrophilic polymer include vinyl polymers.

Examples of the vinyl polymer include: homopolymers of hydroxyethyl methacrylate, hydroxypropyl methacrylate, dihydroxyethyl methacrylate, diethylene glycol methacrylate, triethylene glycol methacrylate, polyethylene glycol methacrylate, vinylpyrrolidone, acrylamide, dimethylacrylamide, glucoxyoxyethyl methacrylate, 3-sulfopropyl methacryloxyethyl dimethylammonium betaine, 2-methacryloyloxyethyl phosphorylcholine, and 1-carboxydimethylmethacryloyloxyethyl methane ammonium; and random copolymers, graft copolymers, and block copolymers of hydrophobic monomers such as styrene, ethylene, propylene, propyl methacrylate, butyl methacrylate, ethylhexyl methacrylate, octadecyl methacrylate, benzyl methacrylate, and methoxyethyl methacrylate, and hydrophilic monomers such as hydroxyethyl methacrylate, hydroxypropyl methacrylate, dihydroxyethyl methacrylate, diethylene glycol methacrylate, triethylene glycol methacrylate, polyethylene glycol methacrylate, vinylpyrrolidone, acrylamide, dimethylacrylamide, glucoxyoxyethyl methacrylate, 3-sulfopropyl methacryloxyethyl dimethylammonium betaine, 2-methacryloyloxyethyl phosphorylcholine, and 1-carboxydimethylmethacryloyloxyethyl methane ammonium.

Other examples of the vinyl polymer include copolymers of cationic monomers such as dimethylaminoethyl methacrylate and diethylaminoethyl methacrylate, anionic monomers such as acrylic acid, methacrylic acid, vinylsulfonic acid, sulfopropyl methacrylate, and phosphoxyethyl methacrylate, and the hydrophobic monomers described above. The vinyl polymer may be an electrically neutral polymer containing equal amounts of an anionic monomer and a cationic monomer.

[Electrically neutral]

The water-insoluble hydrophilic polymer is preferably electrically neutral from the viewpoint of preventing the adsorption of a solute protein.

In the present embodiment, the phrase "electrically neutral" refers to having no charge in a molecule or having equal amounts of a cation and an anion in a molecule.

Examples of the water-insoluble hydrophilic polymer also include polysaccharide cellulose and its derivatives such as cellulose triacetate. The polysaccharide or its derivative also includes cross-linked products of hydroxyalkylcellulose or the like.

The water-insoluble hydrophilic polymer may be polyethylene glycol or its derivative, or may be a block copolymer of ethylene glycol and the hydrophobic monomer, or a random copolymer or a block copolymer of ethylene glycol and propylene glycol, ethylbenzyl glycol, or the like. Polyethylene glycol and these copolymers may be substituted at one end or both ends with a hydrophobic group and thereby rendered water-insoluble.

Examples of the compound of polyethylene glycol substituted at one end or both ends with a hydrophobic group

include $\alpha,\omega$-dibenzyl polyethylene glycol and $\alpha,\omega$-didodecyl polyethylene glycol. The compound may be, for example, a copolymer of polyethylene glycol and a hydrophobic monomer such as dichlorodiphenylsulfone having halogen groups at both ends in a molecule.

Examples of the water-insoluble hydrophilic polymer also include polyethylene terephthalate and polyethersulfone hydrophilized by the replacement of hydrogen atoms in the backbone of polyethylene terephthalate or polyethersulfone obtained by polycondensation with hydrophilic groups. In the hydrophilized polyethylene terephthalate, polyethersulfone, or the like, hydrogen atoms in the backbone may be replaced with anionic groups or cationic groups, or anionic groups and cationic groups may be contained in equal amounts therein.

The water-insoluble hydrophilic polymer may be obtained by ring-opening an epoxy group in a bisphenol A-type or novolac-type epoxy resin, or by introducing a vinyl polymer, polyethylene glycol, or the like into the epoxy group. The water-insoluble hydrophilic polymer may be subjected to silane coupling.

These water-insoluble hydrophilic polymers may each be used singly or may be used as a mixture of two or more thereof.

The water-insoluble hydrophilic polymer is preferably a homopolymer of hydroxyethyl methacrylate, hydroxypropyl methacrylate, or dihydroxyethyl methacrylate; or a random copolymer of a hydrophilic monomer such as 3-sulfopropyl methacryloxyethyl dimethylammonium betaine, 2-methacryloyloxyethyl phosphorylcholine, or 1-carboxydimethylmethacryloyloxyethyl methane ammonium, and a hydrophobic monomer such as butyl methacrylate or ethylhexyl methacrylate, from the viewpoint of easy production, more preferably a homopolymer of hydroxyethyl methacrylate or hydroxypropyl methacrylate; or a random copolymer of a hydrophilic monomer such as 3-sulfopropyl methacryloxyethyl dimethylammonium betaine or 2-methacryloyloxyethyl phosphorylcholine, and a hydrophobic monomer such as butyl methacrylate or ethylhexyl methacrylate, from the viewpoint of easy selection of a solvent in a coating liquid for coating the water-insoluble hydrophilic polymer, and dispersibility and operability in the coating liquid.

The water-insoluble hydrophilic polymer derived from a water-soluble hydrophilic polymer rendered water-insoluble in a membrane production process may be prepared, for example, by copolymerizing a monomer having a side chain azido group and a hydrophilic monomer such as 2-methacryloyloxyethyl phosphorylcholine, and coating the base material membrane of the hydrophobic polymer with the resulting water-soluble hydrophilic polymer, followed by heat treatment so that the water-soluble hydrophilic polymer is covalently bound to the base material membrane and thereby rendered water-insoluble. Alternatively, a hydrophilic monomer such as 2-hydroxyalkyl acrylate may be graft-polymerized to the base material membrane of the hydrophobic polymer.

As shown in Non Patent Literatures 2 and 3, the filtration characteristics of virus removal membranes differ largely depending on the types of antibodies even if foreign substances contained in solutions are removed through a prefilter. This suggests that filterability differs depending on the hydrophobic interaction of an antibody and is reduced with increase in the hydrophobic interaction of the antibody.

An object of the present invention is to provide a porous membrane that has a high filtration throughput of an antibody-containing liquid relative to the hydrophobic interaction of the antibody and is excellent in virus removal performance. A solution of 25°C having an antibody concentration adjusted to 15 mg/mL with a buffer solution is filtered through the porous membrane of the present embodiment at an effective filtration pressure of 196 kPa for 3 hours. In this case, when the hydrophobic interaction of the antibody is defined as A, and the filtration throughput of the antibody-containing solution is defined as B, it is preferred to satisfy the relationship of $B = -62.59A + 84.68 \pm 2.5$ ($1.01 \leq A \leq 1.25$).

The porous membrane of the present embodiment is suitable for the filtration of an antibody having hydrophobic interaction of 1.01 or more and 1.25 or less, The hydrophobic interaction is preferably 1.05 or more and 1.25 or less, more preferably 1.10 or more and 1.25 or less, further preferably 1.15 or more and 1.25 or less.

A value equal to or less than the upper limit ($B = -62.59A + 84.68 + 2.5$) of the expression tends to improve a virus clearance (LRV) to be achieved. A value equal to or more than the lower limit ($B = -62.59A + 84.68 - 2.5$) of the expression tends to improve the filtration throughput of an antibody-containing liquid relative to the hydrophobic interaction of the antibody.

There is no limitation on antibody concentration, virus concentration, filtration temperature, filtration pressure, and filtration time. A solution containing an antibody can be provided and filtered through the porous membrane of the present embodiment to purify the antibody.

[Cross-sectional structure of porous membrane]

The porous membrane of the present embodiment preferably has a gradient structure where the pore size varies continuously from the outer surface toward a wetted surface of the porous membrane. Examples of the gradient structure include, but are not limited to, a sponge structure where the pore size is continuously decreased from the outer surface toward the wetted surface of the membrane (normal gradient structure), a sponge structure where the pore size is continuously decreased from the outer surface toward a smallest-pore size layer of the membrane while the pore size is continuously increased from the smallest-pore size layer toward the wetted surface (reverse gradient structure), and a sponge structure where the pore size is continuously increased from the outer surface toward the wetted surface of the membrane (reverse gradient structure).

The gradient structure with continuously varying pore sizes in the cross-sectional structure of the porous membrane is capable of highly efficiently recovering useful components such as antibodies while suppressing clogging during protein solution filtration.

The porous membrane of the present embodiment is preferably a membrane having a reverse gradient structure having a smallest-pore size layer (dense layer) at an outlet-side part of the membrane, in consideration of the application of the porous membrane to a virus separation and filtration membrane. In the present specification, the "dense layer" is a layer having an average pore size of 50 nm or smaller. A layer having an average pore size of larger than 50 nm is defined as a "coarse layer".

In the present embodiment, the outlet-side part refers to a range from an outlet-side surface corresponding to one of the membrane surfaces to 10% in the membrane thickness. A feed-side part which corresponds to the other membrane surface refers to a feed-side surface to 10% in the membrane thickness. For example, in a porous hollow fiber membrane, the outlet-side part is a range from an inner surface to 10% in the membrane thickness, and the feed-side part is a range from the outer surface to 10% in the membrane thickness, if a liquid is injected to the outer surface side; and the feed-side part is a range from the inner surface to 10% in the membrane thickness, and the outlet-side part is a range from the outer surface to 10% in the membrane thickness, if a liquid is injected to the inner surface side.

In the present embodiment, examples of the form of the porous membrane include flat membranes, hollow fiber membranes (membranes in a hollow fiber form) and membranes in a tubular form.

The porous membrane of the present embodiment is preferably a membrane having a reverse gradient structure having a dense layer at the outlet-side part of the membrane, wherein the membrane has a gradient asymmetric structure where the average pore size of pores is increased from the outlet-side part toward the feed-side part of the membrane, and a slope of the gradient of the average pore size from the dense layer to a coarse layer is 0.5 to 12.0.

In the present embodiment, the dense layer of the porous membrane and the slope of the gradient of the average pore size from the dense layer to the coarse layer are determined by photographing a membrane cross-section under a scanning electron microscope (SEM). For example, a magnification for photographing is set to 50,000×, and a visual field is set horizontally to the membrane thickness direction at an arbitrary part of the membrane cross-section. After an image is taken in the one visual field thus set, the visual field for taking an image is moved horizontally to the membrane thickness direction, and an image is taken in the next visual field. The membrane cross-section is photographed without any space by repeating this photographing operation, and the obtained photographs are combined to obtain one photograph of the membrane cross-section. In this cross-sectional photograph, the average pore size in a range (one visual field) of (2 $\mu$m in a direction perpendicular to the membrane thickness direction) × (1 $\mu$m from the outlet-side surface toward the feed-side surface side in the membrane thickness direction) is calculated every micrometer from the outlet-side surface toward the feed-side surface.

The method for calculating the average pore size is a calculation method using image analysis. Specifically, pore portions and solid portions are binarized using Image-pro plus manufactured by Media Cybernetics, Inc. The pore portions and the solid portions are discriminated on the basis of brightness, and sections that cannot be discriminated or noise is corrected with a free-hand tool. An edge section that forms the contour of a pore portion and a porous structure observed in the back of a pore portion are identified as pore portions. After the binarization, a pore size is calculated from an area value of one pore on the assumption that the shape of the pore is a perfect circle. This calculation is conducted for all pores, and an average pore size is calculated for every 1 $\mu$m × 2 $\mu$m range. Discontinuous pore portions at the ends of the visual fields are also counted.

The slope of the gradient of the average pore size from the dense layer to the coarse layer is calculated on the basis of a visual field defined as the dense layer and a visual field of the coarse layer adjacent to the dense layer. The slope of the gradient is calculated using the dense layer (first visual field) having an average pore size of 50 nm or smaller and the visual field of the coarse layer (second visual field) having an average pore size of larger than 50 nm. In this context, the first visual field and the second visual field are adjacent to each other. Specifically, when the average pore size is increased from the outlet-side part toward the feed-side part of the membrane, two visual fields between which the average pore size is changed from 50 nm or smaller to larger than 50 nm are regarded as the first visual field and the second visual field. Specifically, the slope of the gradient of the average pore size from the dense layer having an average pore size of 50 nm or smaller to the coarse layer having an average pore size of larger than 50 nm can be calculated from the following expression (1).

Slope of the gradient of the average pore size from the dense layer to the coarse layer (nm/$\mu$m) = (Average pore size (nm) of the coarse layer (second visual field) having an average pore size of larger than 50 nm - Average pore size (nm) of the dense layer (first visual field) having an average pore size of 50 nm or smaller) / 1 ($\mu$m) ... (1)        (1)

A virus removal membrane is considered to have the following virus removal mechanism: a solution containing a virus passes through a virus removal layer having a plurality of stacked virus capturing planes perpendicular to the direction of permeation. The pores of the virus capturing planes always have a size distribution, and the virus is captured at a pore having the size smaller than that of the virus. In this respect, although the virus capturing rate is low in one plane, high virus removal performance is achieved by a plurality of planes thus stacked. For example, even if the virus capturing rate is 20% in one plane, the whole virus capturing rate is 99.999% by 50 layers of the planes stacked. Many viruses are captured in a region having an average pore size of 50 nm or smaller.

For example, antibodies, typical physiologically active substances to be filtered, have a molecular size of approximately 10 nm, while parvovirus has a size of approximately 20 nm. An antibody solution which is a filtration solution to be injected to the porous membrane contains foreign substances such as antibody associates in an amount larger than that of viruses.

Even slight increase in the amount of foreign substances in a protein solution is empirically known to drastically reduce a flux. The blockage of pores in the dense layer by the foreign substances is partly responsible for time-dependent reduction in flux. For suppressing the blockage of pores in the dense layer by the foreign substances, it is important not to allow the foreign substances to pass through the dense layer. It is therefore preferred to capture the foreign substances in layers with the gradient structure before the protein solution passes through the dense layer.

For capturing the foreign substances in the layers with the gradient structure as much as possible before passing through the dense layer, it is preferred to increase the capture volume of the foreign substances in the layers with the gradient structure except for the dense layer. The pore size distribution also exists in permeation planes in the layers with the gradient structure except for the dense layer. Therefore, a gentle gradient of the average pore size from the dense layer to the layers with the gradient structure increases the number of planes that can capture the foreign substances and thus increases the number of regions that can capture foreign substances as layers.

The gentle gradient of the average pore size from the dense layer to the coarse layer is important for suppressing reduction in flux caused by the blockage of pores in the dense layer by the foreign substances. The slope of the gradient of the average pore size from the dense layer to the coarse layer is preferably 0.5 to 12.0, more preferably 2.0 to 12.0, further preferably 2.0 to 10.0, because the foreign substances are effectively captured in the layers with the gradient structure immediately before the dense layer.

The porous membrane of the present embodiment is preferably an ultrafiltration membrane. The porous membrane of the present embodiment is more preferably a virus removal membrane having an abundance rate of 10 nm or smaller pores in the dense layer, a thickness of the dense layer, pore size/fiber diameter in the outer surface, and major axis/minor axis of an oriented bounding rectangle of a pore in the outer surface as described below.

In the present embodiment, for example, the blockage of pores in the dense layer by antibody monomers contained in the largest amount in a filtration solution is also partly responsible for time-dependent reduction in flux. Thus, for preventing reduction in flux, it is important to decrease the rate of 10 nm or smaller pores which may cause the blockage by the antibody monomers. However, if the rate of 10 nm or smaller pores is decreased by simply increasing the average pore size, the dense layer becomes thin and reduces virus removal performance. For decreasing the rate of 10 nm or smaller pores while maintaining virus removal performance, it is important to decrease the rate of 10 nm or smaller pores in the dense layer by controlling the pore size distribution in the dense layer having an average pore size of 50 nm or smaller. According to the studies of the present inventors, the abundance rate of 10 nm or smaller pores in the dense layer is preferably 8.0% or less, more preferably 5.0% or less, for achieving highly efficient protein recovery by suppressing the blockage of pores by the monomers while maintaining virus removal performance.

The abundance rate (%) of 10 nm or smaller pores in the dense layer refers to the average of values calculated from the analysis of the SEM images according to the expression (2) given below for all the visual fields defined as the dense layer.

$$\text{(Total number of 10 nm or smaller pores in one visual field defined as the dense layer / Total number of pores in same visual field)} \times 100 \ ... \ (2)$$

The flux which means a permeation speed of a filtration solution is dominated by a speed at which the solution passes through the dense layer, a region having the smallest pore size in the membrane. Time-dependent reduction in flux during filtration can be suppressed by suppressing the blockage of pores in the dense layer. The suppression of time-dependent reduction in flux during filtration leads to efficient protein recovery.

As described above, a virus is captured mainly in a region having an average pore size of 50 nm or smaller in a virus removal membrane. Therefore, for enhancing the ability to capture viruses, the dense layer is preferably thick. However, a thick dense layer reduces the flux of proteins. The thickness of the dense layer is preferably 1 to 8 $\mu$m, more preferably 2 to 6 $\mu$m, for highly efficient protein recovery.

[Dense layer with low pore deformation]

The present inventors have found that "pore size/fiber diameter in the outer surface" and "major axis/minor axis of an oriented bounding rectangle of a pore in the outer surface" of a membrane having a reverse gradient structure having a dense layer at the outlet-side part of the membrane are very important for providing a porous membrane that has a high filtration throughput of an antibody-containing liquid relative to the hydrophobic interaction of the antibody and is excellent in virus removal performance.

In a membrane having a reverse gradient structure having a dense layer as the outer surface of the porous membrane or a membrane having a reverse gradient structure having a dense layer near the outer surface, the dense layer assumes a structure that reflects the structure of the outer surface. The present inventors have completed a dense layer with low pore deformation by producing the outer surface of the porous membrane in as tension-less a manner as possible as mentioned later in a porous membrane production process from the induction of liquid-liquid phase separation by the contact of a membrane formation dope with a non-solvent to the completion of the phase separation (coagulation).

[Pore size/fiber diameter in outer surface of porous membrane]

The pore size/fiber diameter in the outer surface (pore size/fiber diameter ratio J' mentioned later) of the porous membrane of the present embodiment is preferably 0.15 or more and 0.26 or less. The pore size/fiber diameter in the outer surface can be lowered by producing the outer surface of the porous membrane in as tension-less a manner as possible. If the pore size/fiber diameter in the outer surface is less than 0.15, intended water permeation performance is difficult to obtain. If the pore size/fiber diameter in the outer surface is more than 0.26, a virus removal membrane having a high filtration throughput of an antibody-containing liquid relative to the hydrophobic interaction of the antibody is difficult to obtain.

[Major axis/minor axis of oriented bounding rectangle of pore in outer surface of porous membrane]

The major axis/minor axis of an oriented bounding rectangle of a pore in the outer surface (major axis/minor axis ratio M" mentioned later) of the porous membrane of the present embodiment is preferably 1.00 or more and 1.60 or less. The major axis/minor axis of the oriented bounding rectangle of a pore in the outer surface can be lowered by producing the outer surface of the porous membrane in as tension-less a manner as possible. Provided that the outer surface of the porous membrane can be produced in a completely tension-less manner, the oriented bounding rectangle of a pore becomes an oriented bounding square of a pore. Thus, the major axis/minor axis of the oriented bounding rectangle of a pore in the outer surface does not become less than 1.00 theoretically. If the major axis/minor axis of the oriented bounding rectangle of a pore in the outer surface is more than 1.60, a virus removal membrane having a high filtration throughput of an antibody-containing liquid relative to the hydrophobic interaction of the antibody is difficult to obtain.

[Method for identifying structure of porous membrane]

The amount of characteristics of pores in the outer surface structure of the porous membrane, the fiber diameter, and the anisotropy of the structure (e.g., the identification of pore deformation in the dense layer disposed in the outer surface or disposed near the outer surface) can be identified by the following methods.

[Method for obtaining image of outer surface of porous membrane]

When the porous membrane is a hollow fiber membrane, the outer surface is mounted to an observation sample table of a scanning electron microscope (SEM) with a carbon paste. A prepared sample is coated with osmium using an osmium coater (HPC-30W, manufactured by Vacuum Device Inc.) under conditions involving an applied voltage adjustment knob setting of 4.5 and a discharge time of 3 seconds to prepare an observation sample. The observation sample is irradiated with electron beam under conditions given below, and the angle of a visual field is adjusted such that the vertical direction of an image is parallel to the filament length direction of the hollow fiber membrane. In the visual field composed of only the backbone resin and pores, a contrast is adjusted with an automatic function. A magnification for photographing is set to a magnification capable of illustrating an outer surface pore size distribution such that the vertical direction of the image involves 5 or more and 60 or less largest pores and the lateral direction of the image involves 7 or more and 60 or less largest pores. Backscattered electron images are obtained without any structural distortion ascribable to charge-up and abnormal contrast and by excluding the sample table, the carbon paste, and a razor-cut surface.

(SEM apparatus conditions)

SEM: Scanning electron microscope SU7000 manufactured by Hitachi High-Tech Corp.

Probe current: Normal

Accelerating voltage: 1 kV

Working distance: 6 mm

Detector: MD detector (backscattered electron image)

Image size: 960 pixels tall $\times$ 1280 pixels wide

Three lots are used for one type of hollow fiber membrane, and a total of nine or more SEM images are obtained in three or more visual fields without any overlap among the lots.

[Method for calculating fiber diameter F' in outer surface of porous membrane]

A firs image to be analyzed is analyzed using the filters.local_thickness function of the library porespy (2.0.2) of python (3.7.10) described in Reference 1 (Gostick et al., (2019). PoreSpy: A Python Toolkit for Quantitative Analysis of Porous Media Images. Journal of Open Source Software, 4 (37), 1296) with the first image to be analyzed as the first parameter and mode = 'dt' as the second parameter. The filter.local_thickness function is a function that conducts analysis on white pixels in the first image to be analyzed. Therefore, in the case of analyzing the first image to be analyzed, the fiber diameter (unit: pixel) is calculated which is the diameter of the resin backbone. The diameter (unit: pixel) is multiplied by a pixel resolution (unit: m/pixel) to determine a diameter (unit: m). A fiber diameter F in one SEM image can be represented by the following expression (3) using a total number $D_0$ of white pixels and a total sum $E_0$ of all the obtained diameters.

$$F = E_0 / D_0 \quad (3)$$

Since each pixel is given a diameter, F is a weighted average of the fiber diameters in the SEM image. The fiber diameter F is calculated using a total of nine or more SEM images in three or more visual fields each of three lots for one type of hollow fiber membrane. An average value of the fiber diameters F in all of these SEM images is regarded as a fiber diameter F' in the outer surface of the hollow fiber membrane.

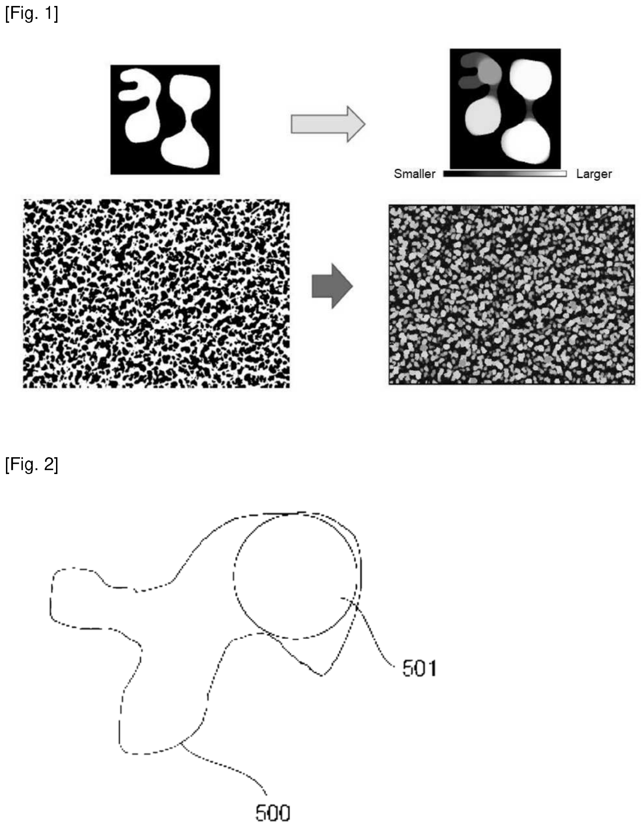

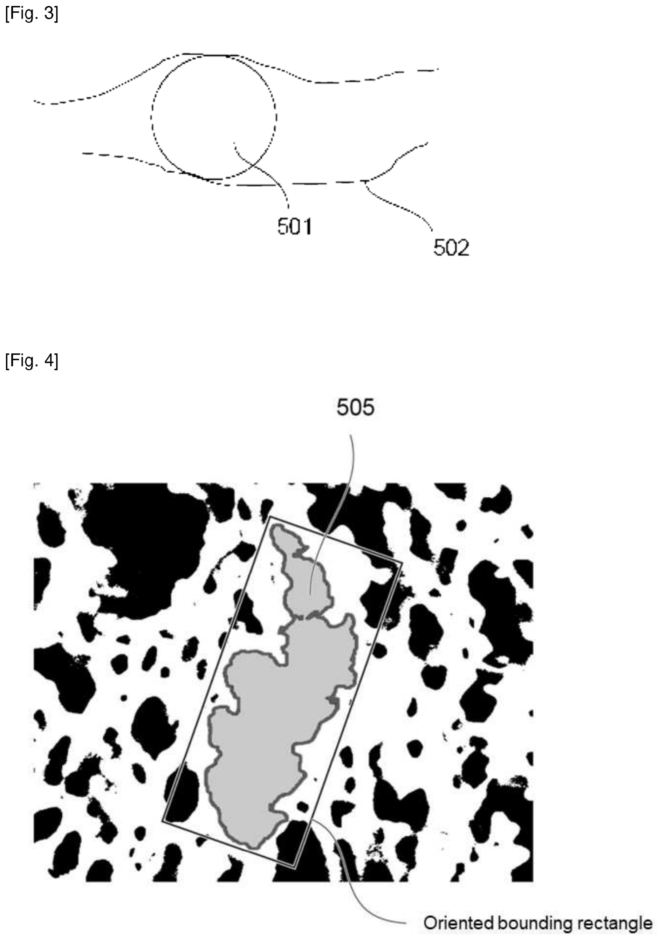

In this context, the local thickness method for use in the filters.local_thickness function determines a diameter, as shown in Figure 1, by filling a region surrounded by a contour with a circle that fits in the region in order from the largest circle. Thus, as shown in Figure 2, a region surrounded by a contour 500 in which a circle 501 fits does not have to be a circle. As shown in Figure 3, a region surrounded by a contour 502 does not have to be a region completely surrounded by line segments. An effective diameter for use in filtration can be calculated for various shapes of fibers in porous membrane surfaces or membrane pores. The same holds true for methods given below using the filters.local_thickness function.

[Method for calculating pore size I' in outer surface of porous membrane]

The first image to be analyzed is inverted between black and white to obtain a second image to be analyzed which is an image in which white pixels in the first image to be analyzed become black and black pixels in the first image to be analyzed become white. The second image to be analyzed is analyzed using the filters.local_thickness function of the library porespy (2.0.2) of python (3.7.10) described in Reference 1 with the second image to be analyzed as the first parameter and mode = 'dt' as the second parameter. The filter.local_thickness function is a function that conducts analysis on white pixels in the second image to be analyzed. Therefore, in the case of analyzing the second image to be analyzed, the pore size (unit: pixel) is calculated. The size (unit: pixel) is multiplied by a pixel resolution (unit: m/pixel) to determine a size (unit: m). A pore size I in one SEM image can be represented by the expression (4) given below using a total number G of white pixels and a total sum H of all the obtained sizes. Since each pixel is given a size, the pore size I is a weighted average of the pore sizes in the SEM image.

$$I = H / G \quad (4)$$

The pore size I is calculated using a total of nine or more SEM images in three or more visual fields each of three lots for one type of hollow fiber membrane. An average value of the pore sizes I in all of these SEM images is regarded as a pore size I' in the outer surface of the hollow fiber membrane.

[Calculation of pore size/fiber diameter ratio J' in outer surface of porous membrane]

The following expression (5) provides a pore size/fiber diameter ratio J using the pore size I and the fiber diameter F in each SEM image.

$$J = I / F \quad (5)$$

The pore size/fiber diameter ratio J is calculated using a total of nine or more SEM images in three or more visual fields each of three lots for one type of hollow fiber membrane. An average value of the pore size/fiber diameter ratios J in all of these SEM images is regarded as a pore size/fiber diameter ratio J' in the outer surface of the hollow fiber membrane. The ratio of the pore size to the fiber diameter (pore size/fiber diameter) in the outer surface of the porous membrane is a value of a pore size effective for filtration normalized to a fiber diameter.

[Cacluation of major axis/minor axis ratio M'' of oriented bounding rectangle of pore present in outer surface of porous membrane]

Independent white regions in the second image to be analyzed are extracted. A white pixel adjacent to a black pixel on any of the left, right, top, and down is extracted from every extracted white region to conduct the contour detection of each region. As shown in Figure 4, the rectangle having the smallest area among oriented bounding rectangles of this contour when rotation is allowed is regarded as the oriented bounding rectangle. Of four sides of the oriented bounding rectangle, the length of a shorter side is defined as a minor axis K, and the length of a longer side is defined as a major axis L. The following expression (6) provides M which represents major axis/minor axis in a certain contour.

$$M = L / K \quad (6)$$

M (major axis/minor axis) is calculated as to all the contours included in one SEM image, and an average value thereof is defined as M'. M' is calculated using a total of nine or more SEM images in three or more visual fields each of three lots for one type of hollow fiber membrane. An average value of the values M' in all of these SEM images is regarded as an average major axis/minor axis ratio M'' of pores present in the inner surface of the hollow fiber membrane. The ratio of the major axis to the minor axis of pores in the outer surface of the porous membrane is an indicator for the anisotropy of the pores in the outer surface (e.g., an indicator for pore deformation in the dense layer disposed in the outer surface or the dense layer disposed near the outer surface).

In the present embodiment, the porous membrane can be produced, for example, but not particularly limited to, as described below when the porous membrane is a porous hollow fiber membrane which is a porous membrane in a hollow fiber form. The production will be described below by taking, as an example, the case of using a polysulfone polymer as the hydrophobic polymer.

For example, the polysulfone polymer, a solvent, and a non-solvent are mixed, dissolved, and defoamed to prepare a membrane formation dope. The membrane formation dope is discharged simultaneously with an inner-side coagulating liquid from an annular portion and a central portion, respectively, of a double tube nozzle (spinneret), and introduced into a coagulation bath through an air gap portion to form a membrane. The obtained membrane is washed with water, then wound, subjected to the removal of a liquid in the hollow portion and heat treatment, and dried. The membrane is then hydrophilized.

The solvent for use in the membrane formation dope can be a wide range of solvents as long as the solvent is a good solvent for polysulfone polymers, such as N-methyl-2-pyrrolidone (NMP), N,N-dimethylformamide (DMF), N,N-dimethylacetamide (DMAc), dimethyl sulfoxide, or $\varepsilon$-caprolactam. An amide-based solvent such as NMP, DMF, or DMAc is preferred, and NMP is more preferred.

The membrane formation dope is preferably supplemented with a non-solvent. Examples of the non-solvent for use in the membrane formation dope include glycerin, water, alcohols, and diol compounds, with the diol compounds being preferable. The diol compound is a generic name for compounds having hydroxy groups at both ends of the molecule. Examples of the diol compound include diethylene glycol (DEG), triethylene glycol (TriEG), tetraethylene glycol (TetraEG), and polyethylene glycol (PEG).

Although the detailed mechanism is not certain, the addition of the non-solvent into the membrane formation dope increases the viscosity of the membrane formation dope, controls coagulation by suppressing the diffusion rates of the solvent and the non-solvent in the coagulating liquid, facilitates structural control preferred for the porous membrane, and is suitable for forming the desired structure.

The solvent/non-solvent ratio in the membrane formation dope is preferably a mass ratio of 40/60 to 80/20.

The concentration of the polysulfone polymer in the membrane formation dope is preferably 15 to 35% by mass, more preferably 20 to 30% by mass, from the viewpoint of membrane strength and permeation performance.

The membrane formation dope is obtained by dissolving the polysulfone polymer, the good solvent, and the non-solvent with stirring at a given temperature. In this respect, the temperature is preferably 30 to 80°C, which is higher than ordinary temperature. Compounds containing tertiary or lower nitrogen (NMP, DMF, and DMAc) are oxidized in the air, and the oxidation further progresses easily when the compounds are warmed. Therefore, the membrane formation dope is preferably prepared in an inert gas atmosphere. Examples of the inert gas include nitrogen and argon. Nitrogen is preferred from the viewpoint of production cost.

The membrane formation dope is preferably defoamed from the viewpoint of the prevention of fiber breakage during spinning and the suppression of macrovoid formation after membrane formation.

The defoaming step can be performed as follows: the internal pressure of a tank containing a completely dissolved membrane formation dope is reduced to 2 kPa, and the dope is left standing for 1 hour or longer. This operation is repeated 7 or more times. The solution may be stirred during defoaming in order to enhance defoaming efficiency.

It is preferred that foreign materials should be removed from the membrane formation dope before being discharged from the spinneret. The removal of foreign materials can prevent fiber breakage during spinning and perform the structural control of the membrane. Also for preventing foreign matters from contaminating the membrane formation dope from a packing of the dope tank, it is preferred to install a filter before the membrane formation dope is discharged from the spinneret. Filters differing in pore size may be installed in a multistage configuration without particular limitations. For example, a mesh filter having a pore size of 30 $\mu$m and a mesh filter having a pore size of 10 $\mu$m are preferably installed in this order from the position nearer to the membrane formation dope tank.

The inner-side coagulating liquid for use in the membrane formation preferably contains the same component as that used in the membrane formation dope or the coagulating liquid. For example, when NMP/TriEG is used as solvent/non-solvent for the membrane formation dope and when NMP/TriEG-water is used as solvent/non-solvent for the coagulating liquid, the inner-side coagulating liquid is preferably constituted by NMP, TriEG, and water.

A larger amount of the solvent in the inner-side coagulating liquid is effective for delaying the progression of coagulation and thereby allowing membrane structure formation to progress slowly. A larger amount of the non-solvent is effective for delaying the diffusion of the solution owing to a thickening effect and delaying the progression of coagulation and thereby allowing membrane structure formation to progress slowly. A larger amount of water is effective for accelerating the progression of coagulation.

For allowing coagulation to progress appropriately without too rapid or too slow progression and controlling the membrane structure to obtain a porous hollow fiber membrane having a membrane structure preferred for filtration membranes, it is preferred to use almost the same amounts of the solvent and the non-solvent as organic components in the inner-side coagulating liquid, and it is preferred to set a solvent/non-solvent (organic components) ratio in the inner-side coagulating liquid to a weight ratio of 35/65 to 65/35 and to set an organic component/water ratio to a mass ratio of 70/30 to 100/0.

The spinneret temperature is preferably 25 to 50°C for an appropriate pore size.

The membrane formation dope is introduced into the coagulation bath through the air gap portion after being discharged from the spinneret. The residence time in the air gap portion is preferably 0.02 to 0.6 seconds. The residence time set to 0.02 seconds or longer can attain sufficient coagulation before introduction to the coagulation bath and an appropriate pore size. The residence time set to 0.6 seconds or shorter prevents excessive progression of coagulation and enables the membrane structure to be precisely controlled in the coagulation bath.

The present inventors have completed a dense layer with low pore deformation by producing the outer surface of the porous membrane in as tension-less a manner as possible in a porous membrane production process from the induction of liquid-liquid phase separation by the contact of a membrane formation dope with a non-solvent to the completion of the phase separation (coagulation).

In conventional methods, a membrane formation dope is transferred through a filter and a spinneret and introduced into a coagulation bath after being moderately coagulated in an air gap portion. The membrane formation dope comes into contact with a non-solvent in an inner-side coagulating liquid to induce liquid-liquid phase separation. If the membrane in a state in which coagulation is not yet completed due to the induced liquid-liquid phase separation is introduced into a general coagulation bath merely containing a coagulating liquid, stretching force (tension) is applied to the membrane due to bathing resistance or frictional resistance ascribable to contact with a roll in the coagulation bath. Therefore, pore deformation tends to occur in the dense layer in the outer surface or in the dense layer near the outer surface.

By contrast, in the present invention, the outer surface of the membrane is brought into contact with a coagulating liquid that moves in the same direction as the direction of movement of the membrane (i.e., a direction parallel to the direction of movement of the membrane) (this coagulating liquid is referred to as an "outer-side coagulating liquid") before the membrane is introduced into the coagulation bath. As a result, tension to be applied to the outer surface of the membrane can be reduced. This can suppress pore deformation in the outer surface of the membrane. In such a scheme, liquid exchange at the interface of the outer surface of the membrane is performed very gradually so that coagulation progresses gradually.

Specific examples of the tension-less production include a method of discharging the membrane formation dope into a tube while injecting the outer-side coagulating liquid into the tube in the same direction as the direction of discharge of the membrane formation dope. An air gap portion exists between the spinneret which discharges the membrane formation dope and the tube.

A smaller difference between the moving speed (linear velocity) of the membrane formation dope discharged from the spinneret and the moving speed (linear velocity) of the outer-side coagulating liquid can reduce tension at the time of contact. Hence, the difference between the linear velocity of the membrane formation dope and the linear velocity of the outer-side coagulating liquid is preferably within ±12%, more preferably within ±10%, still more preferably within ±5%. In the present specification, the difference of within ±12% is expressed as the "same linear velocity".

A slow spinning speed is also preferred for suppressing pore deformation in the outer surface of the membrane. The spinning speed is preferably 2 m/min or less and is preferably 0.1 m/min or more and 2 m/min or less from the viewpoint of productivity.

A draft ratio ([take-over speed] / [linear velocity of discharge of the membrane formation dope]) is preferably 1.1 to 6, more preferably 1.1 to 4, further preferably 1.1 to 2. The take-over speed has the same meaning as the spinning speed when stretch is absent between a take-over machine and a winding machine.

Both the direction of movement of the membrane (direction of discharge of the membrane formation dope) and the direction of movement of the outer-side coagulating liquid are preferably the perpendicular direction (i.e., the direction of gravitational force).

The outer surface of the membrane and the outer-side coagulating liquid are preferably in contact until the completion of phase separation (coagulation). The contact time is preferably 5 seconds to 180 seconds, more preferably 10 seconds to 150 seconds, further preferably 20 seconds to 120 seconds.

Preferred examples of the production method include a production method of setting a spinning speed to 2 m/min or less, and bringing the outer-side coagulating liquid (membrane outer surface coagulating liquid) into contact with the membrane formation dope at the same linear velocity as that of the membrane formation dope discharged from the spinneret and in parallel to the direction of discharge from the spinneret, in a course from the induction of liquid-liquid phase separation by the contact of the membrane formation dope with the inner-side coagulating liquid to the completion of phase separation.

In the present invention, tension to be applied to the membrane from the discharge of the membrane formation dope from the spinneret to the completion of coagulation can be reduced by appropriately setting the difference between the moving speed of the membrane formation dope discharged from the spinneret and the moving speed of the outer-side coagulating liquid, the spinning speed, and the draft ratio. This can suppress pore deformation in the dense layer in the outer surface and in the dense layer near the outer surface, and produce a virus removal membrane having a high filtration throughput of an antibody-containing liquid relative to the hydrophobic interaction.

The outer-side coagulating liquid for use in the membrane formation preferably contains the same component as that used in the membrane formation dope or the inner-side coagulating liquid.

Organic components are effective for slowing down coagulation, and water is effective for accelerating coagulation. Therefore, in the composition of the outer-side coagulating liquid, the solvent/non-solvent (organic components) ratio is a mass ratio of 35/65 to 65/35, and the organic component/water mass ratio is preferably 90/10 to 50/50, more preferably 60/40 to 40/60.

In this context, the spinning speed means a winding speed without stretching operation in a series of hollow fiber membrane production steps of: allowing the membrane formation dope discharged together with the inner-side coagulating liquid from the spinneret to pass through the air gap; bringing the outer-side coagulating liquid into contact with the membrane formation dope at the same linear velocity as that of the membrane formation dope discharged from the spinneret and in parallel to the direction of discharge from the spinneret, in a course from the induction of liquid-liquid phase separation by the contact of the membrane formation dope with the inner-side coagulating liquid to the completion of phase separation; and further winding the membrane after passing through the coagulation bath. The hollow fiber membrane can be produced in a more stable state by surrounding the air gap by a cylindrical tube and injecting a gas having a given temperature and humidity at a given flow rate to the resulting air gap.

In general, a lower concentration of a membrane formation starting material in the dope, a higher dope temperature, a lower concentration of the good solvent in the inner-side coagulating liquid, or a higher temperature of the inner-side coagulating liquid increases a pore size and reduces LRV while elevating a flux. A weaker coagulation force at the time of membrane formation, for example, the addition of a poor solvent with weak coagulation force into the dope or the addition of a good solvent into the outer-side coagulating liquid, increases the thickness of the dense layer and elevates LRV while reducing a flux. Such optimization of various membrane formation conditions and tension-less membrane formation are capable of preparing a virus removal membrane having a membrane structure that achieves both of filterability and virus removability.

The hollow fiber membrane taken out of the coagulation bath is washed with warm water.

In the washing step with water, it is preferred to reliably remove a residual solvent and non-solvent. When the hollow fiber membrane is dried while containing a solvent, the solvent is concentrated in the membrane during drying so that the polysulfone polymer is dissolved or swollen, possibly changing the membrane structure.

The temperature of the warm water is preferably 50°C or higher because of increasing the diffusion rates of the solvent and the non-solvent to be removed and enhancing washing efficiency with water. A Nelson roller is preferably used in the washing step with water.

The residence time of the hollow fiber membrane in the water bath for washing is preferably 80 to 300 seconds for thorough washing with water. Although a longer washing step with water aimed at removing unnecessary components is more preferred, 300 seconds or shorter are appropriate from the viewpoint of production efficiency.

The hollow fiber membrane taken out of the water bath for washing is transferred through a take-over machine and then wound to a reel with a winding machine. In this respect, if the hollow fiber membrane is wound in the air, the membrane is gradually dried so that the membrane shrinks, albeit slightly. As a result, the degree of shrinkage of the membrane differs between the initial stage and the later stage of winding and thereby alters the membrane structure, which is responsible for the non-uniformity of hollow fiber membranes obtained in a production process. The hollow fiber membrane is preferably wound in water for uniform membranes.

The hollow fiber membrane wound to the reel is cut at both ends into a length of 60 cm or smaller and prepared into a bundle, which is then held by a support without being loosen. The hollow fiber membrane thus held is washed by a hot water treatment step after a washing step with water which involves injecting water to the inside of the hollow fibers.

In the hollow portion of the hollow fiber membrane wound to the reel, a white-clouded liquid remains in which fine polysulfone polymer particles having a size of nanometers to micrometers are suspended. If the hollow fiber membrane is dried without removing the white-clouded liquid, the fine polysulfone polymer particles may block the pores of the hollow fiber membrane and reduce membrane performance. It is therefore preferred to remove the white-clouded liquid in the hollow portion.

In the hot water treatment step, fine particles and the like left unremoved by the washing step with water are efficiently removed. The temperature of the hot water is preferably 50 to 100°C. The temperature of the hot water is preferably 50°C or higher because washing efficiency can be enhanced.

The washing time is preferably 30 to 120 minutes. The hot water is preferably replaced with fresh one several times during washing.

The membrane from which the fine particles have been removed is preferably subjected to high-pressure hot water treatment. Specifically, the membrane is placed in a high-pressure steam sterilizer while completely immersed in water, and then treated preferably at 120°C or higher for 2 to 6 hours. Although the detailed mechanism is not certain, the high-pressure hot water treatment not only completely removes the solvent and the non-solvent slightly remaining in the membrane but optimizes the entanglement and the state of existence of the polysulfone polymer in the dense layer region.

The inner diameter of the porous membrane is preferably 200 to 400 $\mu$m, and the membrane thickness is preferably 30 to 80 $\mu$m, because of the ease of processing into a filter.

The hollow fiber membrane is used after being shaped into a filter. A hollow fiber membrane bundle is used in the initial step of filter formation.

A base material membrane (uncoated porous membrane) is prepared into the porous membrane of the present embodiment through a coating step.

For example, for hydrophilization by coating, the coating step comprises: an immersion step of immersing the base material membrane in a coating liquid; a deliquoring step of deliquoring the immersed base material membrane; and a drying step of drying the deliquored base material membrane.

In the immersion step, the base material membrane is immersed in a hydrophilic polymer solution. The solvent in the coating liquid is a good solvent for hydrophilic polymers and is not particularly limited as long as the solvent is a poor solvent for polysulfone polymers. An alcohol is preferred.

The concentration of the water-insoluble hydrophilic polymer in the coating liquid is preferably 1.0% by mass or more from the viewpoint of sufficiently coating the pore surface of the base material membrane with the hydrophilic polymer and suppressing time-dependent reduction in flux caused by the adsorption of proteins during filtration, and is preferably 10.0% by mass or less from the viewpoint of coating the pore surface with an appropriate thickness and preventing reduction in flux caused by too small a pore size.

The immersion time of the base material membrane in the coating liquid is preferably 8 to 24 hours.

The base material membrane immersed in the coating liquid for a predetermined time is deliquored in the deliquoring step in which an extra coating liquid attached to the hollow portion and outer circumference of the membrane is deliquored by centrifugal operation. It is preferable to set the centrifugal force in the centrifugal operation to 10 G or more and to set the time of the centrifugal operation to 30 minutes or longer, from the viewpoint of preventing membranes from being firmly fixed to each other due to a remaining hydrophilic polymer after drying.

Examples

Hereinafter, the present embodiment will be described in detail with reference to Examples. However, the present invention is not limited to Examples given below. Measurement methods shown in Examples are as described below. Pore size/fiber diameter in the outer surface, major axis/minor axis of an oriented bounding rectangle of a pore in the outer surface, an abundance rate of 10 nm or smaller pores in a dense layer, and a slope of the gradient of an average pore size from the dense layer to a coarse layer were measured by the methods mentioned above.

(1) Measurement of inner diameter and membrane thickness

The inner diameter of a porous hollow fiber membrane was determined by photographing the vertically split cross-section of the membrane under a stereoscopic microscope.
The outer diameter was determined in the same manner as in the inner diameter, and the membrane thickness was determined according to (Outer diameter - Inner diameter) / 2.
The membrane area was calculated from the inner diameter and an effective length of the hollow fiber membrane.

(2) Measurement of permeation speed of pure water

The amount of pure water of 25°C filtered was measured by dead-end filtration at a constant pressure of 1.0 bar using a filter assembled such that an effective membrane area was 3.3 cm$^2$. The water permeability was calculated from a filtration time.

(3) Thickness of dense layer

The hollow fiber cross-section was photographed under a scanning electron microscope (SEM) in such a way that an accelerating voltage and a magnification for photographing were set to 1 kV and 50,000×, respectively, and a visual field was set horizontally to the membrane thickness direction at an arbitrary part of the hollow fiber cross-section. After photographing in the one visual field thus set, the visual field for photographing was moved horizontally to the membrane thickness direction, and the next visual field was photographed. The membrane cross-section was photographed without any space by repeating this photographing operation, and the obtained photographs were combined to obtain one photograph of the membrane cross-section. In this cross-sectional photograph, an average pore size was calculated in a range of (2 μm in the circumferential direction of the membrane) × (1 μm from the outer surface toward the inner surface side).
The average pore size was calculated by a method using image analysis. Specifically, pore portions and solid portions were discriminated on the basis of brightness using Image-pro plus manufactured by Media Cybernetics, Inc. Sections that could not be discriminated or noise was corrected with a free-hand tool. An edge section that formed the contour of a pore portion and a porous structure observed in the back of a pore portion were identified as pore portions. After binarization, a pore diameter was calculated as two significant figures from an area value of one pore on the assumption that the shape of the pore was a perfect circle. This calculation was conducted for all pores, and an average pore size was calculated for every 1 μm × 2 μm range. Discontinuous pore portions at the ends of the visual fields were also counted.
A visual field having an average pore size of 50 nm or smaller was regarded as the dense layer, and the thickness of the dense layer was defined by "the number of images showing the average pore size of 50 nm or smaller × 1 μm".

(4) Protein filtration test

A filter assembled such that an effective membrane area was 3.3 cm$^2$ was subjected to high-pressure steam sterilization treatment at 122°C for 60 minutes. The integrated amount of proteins filtered is determined by the following experiment: a solution was prepared by dissolving a monoclonal antibody having a HIC (hydrophobic interaction) value of 1.25 and an isoelectric point of 7.0 at 15 mg/mL in a 100 mM acetate-sodium hydroxide buffer solution and 200 mM sodium chloride with pH 5.5, and filtered at a constant pressure of 2.0 bar at a temperature of 25°C for 3 hours. In this respect, the integrated amount of proteins recovered was calculated from the amount of a filtrate recovered, the protein concentration of the filtrate, and the membrane area of the filter. The protein used in filtration was purchased as a preparation for test and research. In this test, a protein throughput of 4.0 kg or more was regarded as a high filtration throughput.

(5) Virus clearance measurement

The solution prepared in "(4) Protein filtration test" was spiked with a solution containing 0.5% by volume of minute virus of mice (MVM), and the resulting solution was used as a filtration solution. The prepared filtration solution was filtered by dead-end filtration at a constant pressure of 2.0 bar for 180 minutes. The titer (TCID50 value) of the filtrate was measured by virus assay. The virus clearance of PPV was calculated according to LRV = Log(TCID50) / mL (filtration solution) - Log(TCID50) / mL (filtrate). In this measurement, LRV of 5 or more was regarded as high virus removability.

(6) Elution evaluation

100 mL of pure water of 25°C was filtered by dead-end filtration at a constant pressure of 2.0 bar using the filter prepared by the same method as in the above section (4). The filtrate was recovered and concentrated. The amount of carbon in the obtained concentrate was measured with a total organic carbon meter TOC-L (manufactured by Shimadzu Corp.) to calculate an elution rate from the membrane.

(7) Measurement of hydrophobic interaction (HIC) of antibody

The HPLC system used was ACQUITY UPLC H-Class Bio System (Waters Corp.), the column used was ACQUITY TSKgel Butyl-NPR Column (Waters Corp.), and the detector used was an ultraviolet-visible light detector (280 nm). The eluent used was a 2 M aqueous ammonium sulfate solution, a 0.04 M phosphate buffer solution (pH 7.0), and ultrapure water. A relative retention time was regarded as an HIC value when the retention time of Venoglobulin IH 5% I.V. commercially available from Mitsubishi Tanabe Pharma Corp. was set to 1. In this measurement, a protein having an HIC value of 1.01 or more was regarded as an antibody having a high degree of hydrophobicity.

[Example 1]

24 parts by mass of PES (ULTRASON(R) E6020P manufactured by BASF SE), 36 parts by mass of NMP (manufactured by Kishida Chemical Co., Ltd.), and 40 parts by mass of TriEG (manufactured by Kanto Chemical Co., Inc.) were mixed at 35°C and then defoamed under reduced pressure of 2 kPa seven repetitive times, and the resulting solution was used as a membrane formation dope. This membrane formation dope was kept at 35°C and discharged, together with an inner-side coagulating liquid composed of 75 parts by mass of NMP and 25 parts by mass of water (water content: 25% by weight), from a spinneret (double annular nozzle, nozzle temperature: 35°C, temperature of the membrane formation dope at the nozzle portion: 35°C, temperature of the inner-side coagulating liquid: 35°C), and allowed to pass through a sealed 30 mm air gap. An outer-side coagulating liquid (temperature: 20°C) composed of 25 parts by mass of NMP and 75 parts by mass of water was brought into 2-m contact with the membrane formation dope (i.e., the dope traveled 2 m together with the outer-side coagulating liquid in a tube having a diameter of 1.0 cm) at the same linear velocity as that of the membrane formation dope discharged from the spinneret and in parallel to the direction of discharge from the spinneret. The resulting dope was introduced into a coagulation bath of 20°C containing a coagulating liquid composed of 25 parts by mass of NMP and 75 parts by mass of water. The spinning speed was 1.5 m/min. The completion of phase separation, as a result of the 2 m contact between the membrane formation dope and the outer-side coagulating liquid in parallel to the direction of discharge from the spinneret, was confirmed. The draft ratio (ratio between the spinning speed and the linear velocity of discharge of the membrane formation dope from the spinneret) was set to 2. The membrane taken out of the coagulation bath was allowed to travel on a Nelson roll in a water bath for washing set to 55°C, and then wound using a reel in water.

The wound membrane was cut at both ends of the reel, and prepared into a bundle, which was then held by a support without being loosen. The membrane was immersed in hot water of 80°C and washed for 60 minutes. The washed membrane was subjected to high-pressure hot water treatment under conditions of 128°C and 3 hours and then dried in vacuum to obtain a base material membrane in a hollow fiber form.

The obtained base material membrane in a hollow fiber form was immersed in a coating liquid containing 2.5 parts by mass of polyhydroxyethyl methacrylate (PHEMA) having a weight-average molecular weight of 80 kDa (produced using hydroxyethyl methacrylate (manufactured by Kanto Chemical Co., Inc.)) and 97.5 parts by mass of methanol for 24 hours and centrifugally deliquored at 12.5 G for 30 minutes. The membrane thus centrifugally deliquored was dried in vacuum for 18 hours to obtain a porous membrane in a hollow fiber form.

The performance of the obtained porous membrane is shown in Table 1 below. The membrane was confirmed to have a high filtration throughput of an antibody-containing liquid relative to the hydrophobic interaction of the antibody and be excellent in virus removal performance.

[Example 2]

The procedures were performed in the same manner as in Example 1 except that the draft ratio was set to 1.2. The performance of the obtained porous membrane is shown in Table 1 below. The membrane was confirmed to have a high filtration throughput of an antibody-containing liquid relative to the hydrophobic interaction of the antibody and be excellent in virus removal performance.

[Example 3]

The procedures were performed in the same manner as in Example 1 except that the draft ratio was set to 4. The performance of the obtained porous membrane is shown in Table 1 below. The membrane was confirmed to have a high filtration throughput of an antibody-containing liquid relative to the hydrophobic interaction of the antibody and be excellent in virus removal performance.

[Example 4]

The procedures were performed in the same manner as in Example 1 except that an outer-side coagulating liquid (temperature: 15°C) composed of 15 parts by mass of NMP and 85 parts by mass of water was brought into 2-m contact with the membrane formation dope (i.e., the dope traveled 2 m together with the outer-side coagulating liquid in a tube having a diameter of 1.0 cm) at the same linear velocity as that of the membrane formation dope discharged from the spinneret and in parallel to the direction of discharge from the spinneret; and the resulting dope was introduced into a coagulation bath of 15°C containing a coagulating liquid composed of 15 parts by mass of NMP and 85 parts by mass of water. The completion of phase separation, as a result of the 2 m contact between the membrane formation dope and the outer-side coagulating liquid in parallel to the direction of discharge from the spinneret, was confirmed. The performance of the obtained porous membrane is shown in Table 1 below. The membrane was confirmed to have a high filtration throughput of an antibody-containing liquid relative to the hydrophobic interaction of the antibody and be excellent in virus removal performance.

[Example 5]

The procedures were performed in the same manner as in Example 1 except that the membrane formation dope was kept at 40°C and discharged, together with an inner-side coagulating liquid composed of 74 parts by mass of NMP and 26 parts by mass of water (water content: 26% by weight), from a spinneret (double annular nozzle, nozzle temperature: 40°C, temperature of the membrane formation dope at the nozzle portion: 40°C, temperature of the inner-side coagulating liquid: 40°C), and allowed to pass through a sealed 30 mm air gap; an outer-side coagulating liquid (temperature: 18°C) composed of 45 parts by mass of NMP and 55 parts by mass of water was brought into 2-m contact with the membrane formation dope (i.e., the dope traveled 2 m together with the outer-side coagulating liquid in a tube having a diameter of 1.0 cm) at the same linear velocity as that of the membrane formation dope discharged from the spinneret and in parallel to the direction of discharge from the spinneret; and the resulting dope was introduced into a coagulation bath of 18°C containing a coagulating liquid composed of 45 parts by mass of NMP and 55 parts by mass of water. The completion of phase separation, as a result of the 2 m contact between the membrane formation dope and the outer-side coagulating liquid in parallel to the direction of discharge from the spinneret, was confirmed. The performance of the obtained porous membrane is shown in Table 1 below. The membrane was confirmed to have a high filtration throughput of an antibody-containing liquid relative to the hydrophobic interaction of the antibody and be excellent in virus removal performance.

[Comparative Example 1]

The procedures were performed in the same manner as in Example 1 except that the spinning speed was set to 4 m/min; the draft ratio was set to 10; and an 80 mm air gap was used. The performance of the obtained porous membrane is shown in Table 1 below. Virus removal performance was reduced because the outer surface and the dense layer of the porous membrane had no appropriate structure.

[Comparative Example 2]

The procedures were performed in the same manner as in Example 1 except that the membrane formation dope was kept at 25°C and discharged, together with an inner-side coagulating liquid composed of 73 parts by mass of NMP and 27 parts by mass of water (water content: 27% by weight), from a spinneret (double annular nozzle, nozzle temperature:

25°C, temperature of the membrane formation dope at the nozzle portion: 25°C, temperature of the inner-side coagulating liquid: 25°C), and allowed to pass through a sealed 30 mm air gap; an outer-side coagulating liquid (temperature: 15°C) composed of 10 parts by mass of NMP and 90 parts by mass of water was brought into 2-m contact with the membrane formation dope (i.e., the dope traveled 2 m together with the outer-side coagulating liquid in a tube having a diameter of 1.0 cm) at the same linear velocity as that of the membrane formation dope discharged from the spinneret and in parallel to the direction of discharge from the spinneret; and the resulting dope was introduced into a coagulation bath of 15°C containing a coagulating liquid composed of 10 parts by mass of NMP and 90 parts by mass of water. The completion of phase separation, as a result of the 2 m contact between the membrane formation dope and the outer-side coagulating liquid in parallel to the direction of discharge from the spinneret, was confirmed. The performance of the obtained porous membrane is shown in Table 1 below. Virus removal performance was reduced because the dense layer thickness was smaller than 1 μm.

[Comparative Example 3]

24 parts by mass of PES (ULTRASON(R) E6020P manufactured by BASF SE), 30.4 parts by mass of NMP (manufactured by Kishida Chemical Co., Ltd.), 5 parts by mass of water, 33.6 parts by mass of TriEG (manufactured by Kanto Chemical Co., Inc.), and 12 parts by mass of a vinylpyrrolidone-vinyl acetate copolymer (Luviskol(R) VA64 manufactured by BASF SE; hereinafter, referred to as "VA64") were mixed at 50°C and then defoamed under reduced pressure of 2 kPa seven repetitive times, and the resulting solution was used as a membrane formation dope. This membrane formation dope was kept at 30°C and discharged, together with an inner-side coagulating liquid composed of 52.8 parts by mass of NMP, 42.2 parts by mass of TriEG, and 5 parts by mass of water (water content: 5% by weight), from a spinneret (double annular nozzle, nozzle temperature: 30°C, temperature of the membrane formation dope at the nozzle portion: 30°C, temperature of the inner-side coagulating liquid: 30°C), and allowed to pass through a sealed 80 mm air gap. An outer-side coagulating liquid (temperature: 30°C) composed of 38.9 parts by mass of NMP, 31.1 parts by mass of TriEG, and 30 parts by mass of water was brought into 2-m contact with the membrane formation dope (i.e., the dope traveled 2 m together with the outer-side coagulating liquid in a tube having a diameter of 1.0 cm) at the same linear velocity as that of the membrane formation dope discharged from the spinneret and in parallel to the direction of discharge from the spinneret. The resulting dope was introduced into a coagulation bath of 30°C containing a coagulating liquid composed of 38.9 parts by mass of NMP, 31.1 parts by mass of TriEG, and 30 parts by mass of water. The spinning speed was 20 m/min. The completion of phase separation, as a result of the 2 m contact between the membrane formation dope and the outer-side coagulating liquid in parallel to the direction of discharge from the spinneret, was confirmed. The draft ratio was set to 2. The membrane taken out of the coagulation bath was allowed to travel on a Nelson roll in a water bath for washing set to 55°C, and then wound using a reel in water.

The wound membrane was cut at both ends of the reel, and prepared into a bundle, which was then held by a support without being loosen. The membrane was immersed in hot water of 80°C and washed for 60 minutes. The washed membrane was subjected to high-pressure hot water treatment under conditions of 128°C and 3 hours and then dried in vacuum to obtain a base material membrane in a hollow fiber form.

The obtained base material membrane in a hollow fiber form was immersed in a coating liquid containing 2.5 parts by mass of polyhydroxyethyl methacrylate having a weight-average molecular weight of 80 kDa (produced using hydroxyethyl methacrylate (manufactured by Kanto Chemical Co., Inc.)) and 97.5 parts by mass of methanol for 24 hours and centrifugally deliquored at 12.5 G for 30 minutes. The membrane thus centrifugally deliquored was dried in vacuum for 18 hours to obtain a porous membrane in a hollow fiber form.

The performance of the obtained porous membrane is shown in Table 1 below. A protein throughput was reduced because the outer surface and the dense layer of the porous membrane had no appropriate thickness.

[Comparative Example 4]

The procedures were performed in the same manner as in Example 3 except that the discharged membrane formation dope was brought into 2-m contact with 300 L of a stagnant coagulating liquid in a coagulating liquid layer (i.e., the operation of bringing the outer-side coagulating liquid into contact with the membrane formation dope at the same linear velocity was not carried out). The performance of the obtained porous membrane is shown in Table 1 below. A protein throughput was reduced because pore size/fiber diameter and major axis/minor axis of an oriented bounding rectangle of a pore in the outer surface of the porous membrane were increased.

[Comparative Example 5]

The procedures were performed in the same manner as in Example 1 except that the outer-side coagulating liquid temperature and the coagulating liquid temperature were set to 25°C; the spinning speed was set to 5 m/min; and the draft ratio was set to 2. A protein throughput was reduced because the pore size/fiber diameter ratio and the major axis/minor axis ratio in the outer surface were increased.

[Table 1]

| | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|
| Inner diameter ($\mu$m) | 325 | 325 | 325 | 328 | 321 | 311 | 319 | 200 | 330 | 330 |
| Membrane thickness ($\mu$m) | 65 | 65 | 65 | 64 | 62 | 59 | 60 | 60 | 65 | 65 |
| Hydrophobic polymer | PES | PES | PES | PES | PES | PES | PES | PES | PES | PES |
| Water-insoluble hydrophilic polymer | PHEMA | PHEMA | PHEMA | PHEMA | PHEMA | PHEMA | PHEMA | PHEMA | PHEMA | PHEMA |
| Pore size/fiber diameter in outer surface | 0.19 | 0.16 | 0.25 | 0.18 | 0.18 | 0.31 | 0.19 | 0.27 | 0.35 | 0.27 |
| Major axis/minor axis of oriented bounding rectangle of pore in outer surface | 1.46 | 1.12 | 1.59 | 1.45 | 1.46 | 1.71 | 1.48 | 1.68 | 1.94 | 1.63 |
| Abundance rate of 10 nm or smaller pores in dense layer (%) | 3.3 | 3.0 | 5.2 | 7.5 | 3.1 | 9.1 | 6.2 | 14.0 | 7.8 | 2.8 |
| Thickness of dense layer ($\mu$m) | 4 | 4 | 4 | 3 | 7 | 3 | Smaller than 1 | 10 | 3 | 4 |
| Slope of gradient of average pore size from dense layer to wetted surface | 7.6 | 7.5 | 7.9 | 10.2 | 0.9 | 14.3 | 11.7 | 0.9 | 11.8 | 6.2 |
| LRV | 5 or more | 5 or more | 5 or more | 5 or more | 5 or more | 1 | 3 | 5 or more | 4.5 | 4.5 |
| Water permeability (L/(hr·m$^2$·bar)) | 330 | 325 | 355 | 248 | 220 | 455 | 436 | 78 | 345 | 430 |

(continued)

| | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|
| Filtration through-put of antibody-containing solution (kg/m²/3hr) | 8.5 | 8.5 | 8.0 | 6.0 | 7.0 | 12.0 | 11.0 | 3.2 | 3.8 | 3.6 |
| Elution rate | No elution | No elution | No elution | No elution | No elution | No elution | No elution | No elution | No elution | No elution |

## EP 4 721 845 A1

**Industrial Applicability**

The porous membrane according to the present invention is a membrane that has a high filtration throughput of an antibody-containing liquid relative to the hydrophobic interaction of the antibody and is excellent in virus removal performance, and as such, suitably has industrial applicability.

**Reference Signs List**

500: contour

501: circle

502: contour

505: one example of a pore present in the outer surface of the porous membrane

**Claims**

1. A porous membrane comprising a hydrophobic polymer and a water-insoluble hydrophilic polymer, wherein

   pore size/fiber diameter in an outer surface of the porous membrane is 0.15 or more and 0.26 or less,
   major axis/minor axis of an oriented bounding rectangle of a pore in the outer surface of the porous membrane is 1.00 or more and 1.60 or less, and
   the porous membrane has a dense layer, wherein
   an abundance rate of 10 nm or smaller pores in the dense layer is 8.0% or less, and
   a thickness of the dense layer is 1 to 8 $\mu$m.

2. The porous membrane according to claim 1, wherein the water-insoluble hydrophilic polymer is electrically neutral.

3. The porous membrane according to claim 1, wherein the hydrophobic polymer is a polysulfone polymer.

4. The porous membrane according to claim 1 or 2, wherein the water-insoluble hydrophilic polymer is a vinyl polymer.

5. The porous membrane according to claim 1, wherein the porous membrane has a gradient structure where the pore size varies continuously from the outer surface toward a wetted surface of the porous membrane.

6. The porous membrane according to claim 1 or 5, wherein a slope of the gradient of an average pore size from the dense layer to a coarse layer is 0.5 to 12.0.

7. The porous membrane according to claim 1 or 5, wherein the porous membrane is an ultrafiltration membrane.

8. The porous membrane according to claim 1 or 5, wherein the porous membrane is a virus removal membrane.

9. The porous membrane according to claim 1 or 5, wherein the porous membrane is a membrane in a hollow fiber form or a membrane in a tubular form.

10. A filter comprising a porous membrane according to claim 1 or 5.

11. A method for producing a porous membrane, comprising:

    discharging a membrane formation dope containing a hydrophobic polymer, a good solvent, and a non-solvent from a spinneret; and
    bringing a membrane outer surface coagulating liquid into contact with the membrane formation dope at the same linear velocity as that of the membrane formation dope discharged from the spinneret and in parallel to the direction of discharge of the membrane formation dope.

12. A method for purifying an antibody, comprising: providing a solution containing the antibody; and filtering the solution through a porous membrane according to claim 1 to purify the antibody.

[Fig. 1]

[Fig. 2]

[Fig. 3]

501

502

[Fig. 4]

505

Oriented bounding rectangle

## INTERNATIONAL SEARCH REPORT

| | International application No. |
|---|---|
| | **PCT/JP2024/018944** |

**A. CLASSIFICATION OF SUBJECT MATTER**

***B01D 69/00***(2006.01)i; ***B01D 61/14***(2006.01)i; ***B01D 69/02***(2006.01)i; ***B01D 69/04***(2006.01)i; ***B01D 69/08***(2006.01)i; ***B01D 71/40***(2006.01)i; ***B01D 71/68***(2006.01)i

FI:   B01D69/00; B01D71/68; B01D71/40; B01D61/14 500; B01D69/04; B01D69/08; B01D69/02

According to International Patent Classification (IPC) or to both national classification and IPC

**B. FIELDS SEARCHED**

Minimum documentation searched (classification system followed by classification symbols)

B01D61/00-B01D71/82;C02F1/44

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2016/113964 A1 (ASAHI KASEI MEDICAL CO., LTD.) 21 July 2016 (2016-07-21) paragraphs [0049], [0063] | 1-12 |
| A | WO 2016/031834 A1 (ASAHI KASEI MEDICAL CO., LTD.) 03 March 2016 (2016-03-03) paragraphs [0015], [0100] | 1-12 |
| A | JP 8-332361 A (KURARAY CO., LTD.) 17 December 1996 (1996-12-17) paragraphs [0006], [0021]-[0022], [0026] | 1-12 |
| A | JP 2005-342414 A (TOYO BOSEKI KABUSHIKI KAISHA) 15 December 2005 (2005-12-15) paragraph [0062] | 1-12 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **26 July 2024** | **06 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/018944**

| Patent document cited in search report | | | Publication date (day/month/year) | Patent family member(s) | Publication date (day/month/year) |
|---|---|---|---|---|---|
| WO | 2016/113964 | A1 | 21 July 2016 | US 2017/0361285 A1<br>paragraphs [0088], [0125]<br>EP 3246085 A1<br>paragraphs [0088], [0121]<br>CN 105980037 A<br>paragraphs [0090]-[0091], [0127] | |
| WO | 2016/031834 | A1 | 03 March 2016 | US 2017/0266626 A1<br>paragraphs [0028]-[0053], [0230]-[0234]<br>EP 3195922 A1<br>paragraphs [0022], [0194]-[0198]<br>CN 106573203 A<br>paragraphs [0032]-[0052], [0266] | |
| JP | 8-332361 | A | 17 December 1996 | (Family: none) | |
| JP | 2005-342414 | A | 15 December 2005 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4024041 B
- WO 2004035180 A
- JP 4504963 B
- WO 2011111679 A
- JP 5403444 B
- JP 6770807 B

- JP 6522001 B
- JP 6433513 B
- JP 6385444 B
- JP 6367977 B
- JP 7185766 B

**Non-patent literature cited in the description**

- *PDA Journal of GMP and Validation in Japan*, 2005, vol. 7 (1), 44
- *Biotechnology and Bioengineering*, 2021, vol. 118, 1105-1115

- *Biotechnology and Bioengineering*, 2010, vol. 106, 627-637